# EUROPEAN PATENT APPLICATION

(11) **EP 1 113 042 A2**
(43) Date of publication of application: **04.07.2001**
(21) Application number: 00311386.7
(22) Date of filing: 19.12.2000
(51) Int. Cl.: C08K 5/13, C08L 83/04

(54) **Silicone rubber composition for insert molding or two-cavity molding**

(30) Priority: 20.12.1999 JP 36098499
(71) Applicant: Dow Corning Toray Silicone Co., Ltd., Tokyo (JP)
(72) Inventor: Tsuji, Yuichi, Dow Corning Toray Silicone., Ltd., Ichihara-shi, Chiba Prefecture (JP); Shigehisa, Y., Dow Corning Toray Silicone., Ltd., Ichihara-shi, Chiba Prefecture (JP); Otomo, T., Dow Corning Toray Silicone., Ltd., Ichihara-shi, Chiba Prefecture (JP)
(74) Representative: Kyle, Diana

(57) **Abstract**

A silicone rubber composition for insert molding or two-cavity molding comprising from 0.01 wt% to 10 wt% of a phenolic compound having at least one alkoxy group and at least one alkenyl group per molecule.

## Description

The present invention relates to a silicone rubber composition, and in particular to a silicone rubber composition of superior adhesive properties with respect to organic resin and superior mold release properties with respect to molding dies.

The process that has been used for adhering silicone rubber to organic resins consists in pre-treating the surface of an organic resin molding with a primer composition whose principal component is a silane coupling agent, adhering an uncured silicone rubber composition thereto, and curing them. This process, however, required a coating step and a drying step as primer composition pre-treatment steps, which lead to problems such as low operating efficiency. In addition, insufficient primer composition pre-treatment can lead to problems by causing deterioration in the adhesive properties of silicone rubber with respect to moldings of organic resin.

In the past with a view to overcome the above problems, silicone rubber compositions have been described which exhibited improved self-adhesive performance due to various adhesion promoters compounded with these silicone rubber compositions (see Japanese Application No. Hei 06-171021, Japanese Application No. Hei 06-171022, and Japanese Application No. Hei 06-171023). However, the problem presented by this type of self-adhesive silicone rubber compositions, when employed in the insert molding technique (a process, in which a composite molding made up of an organic resin molding and a silicone rubber molding integrally coupled in one body is obtained by positioning a pre-formed organic resin molding inside a mold cavity, injecting a silicone rubber composition therein, and curing it inside the cavity) or in the two-cavity molding technique (a process, in which a composite molding made up of an organic resin molding and a silicone rubber molding integrally coupled in one body is obtained by injecting organic resin into a mold cavity, followed by forming a new cavity in the upper portion of the cavity, injecting a silicone rubber composition therein, and curing it), is that silicone rubber moldings adhere or become firmly bonded to the molding dies and cannot be removed therefrom as intact molded products.

The authors of the present invention have arrived at the present invention as a result of in-depth investigations aimed at overcoming the above-described problems. Namely, it is an object of the present invention to provide a silicone rubber composition of superior adhesive properties with respect to moldings of organic resin and superior mold release properties with respect to molding dies, and which is suitable for insert molding or two-cavity molding.

The present invention is a silicone rubber composition for insert molding or two-cavity molding comprising from 0.01 wt% to 10 wt% of a phenolic compound having at least one alkoxy group and at least one alkenyl group per molecule.

The present invention is a silicone rubber composition for insert molding or two-cavity molding comprising from 0.01 wt% to 10 wt% of a phenolic compound having at least one alkoxy group and at least one alkenyl group per molecule. To explain the above in greater detail, the phenolic compound having at least one alkoxy group and at least one alkenyl group per molecule, as employed in the present invention, is an adhesion promoter utilized to cause silicone rubber to adhere to organic resin. Such a phenolic compound must have at least one alkoxy group and at least one alkenyl group per molecule. Here, the alkoxy groups are exemplified by methoxy, ethoxy, propoxy, and butoxy groups, with methoxy groups being preferable. The alkenyl groups are exemplified by vinyl, allyl, butenyl, pentenyl, and hexenyl groups, with vinyl groups being preferable. This type of phenolic compound is exemplified by the organic compounds shown below.

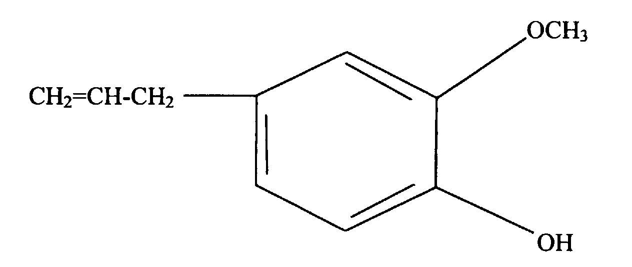

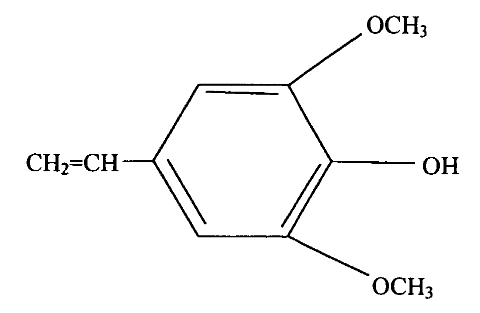

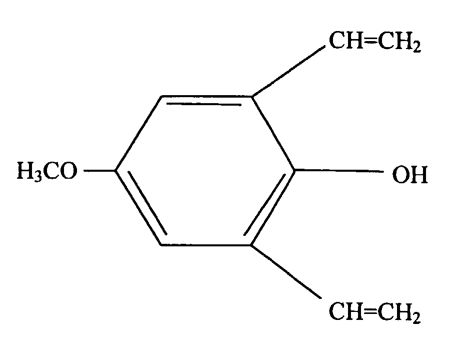

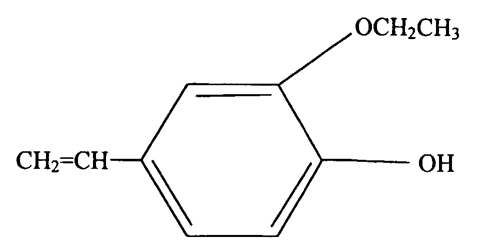

The proportion of the phenolic compound in the silicone rubber composition is from 0.01 wt% to 10 wt%, preferably from 0.05 wt% to 5 wt%, and more preferably from 0.1 wt% to 3 wt%. The reason for this is that there are no appreciable adhesive properties with respect to organic resin when the content is less than 0.01 wt%, and there is a decrease in properties inherent to silicone rubber, such as, for example, heat resistance, when it exceeds 10 wt%.

The present silicone rubber composition contains from 0.01 wt% to 10 wt% of the above-described phenolic compound. Addition reaction curable type silicone rubber compositions which cure in the presence of platinum catalysts and whose principal components are organopolysiloxanes containing silicon-bonded hydrogen atoms and organopolysiloxanes containing alkenyl groups, such as vinyl, allyl, etc., and organic peroxide curable type silicone rubber compositions which cure in the presence of organic peroxides and whose principal components are organopolysiloxanes containing alkenyl groups, such as allyl, are suggested as such silicone rubber compositions. Among them, the addition reaction curable type silicone rubber compositions are preferable.

Preferred are reaction curable type silicone rubber compositions comprising the following components
(A) 100 parts by weight polydiorganosiloxane having at least two silicon-bonded alkenyl groups per molecule,
(B) polyorganosiloxane having at least three silicon-bonded hydrogen atoms per molecule in an amount such that the ratio of the number of moles of silicon-bonded hydrogen atoms in the component (B) to the sum of the number of moles of silicon-bonded alkenyl groups in component (A) and the number of moles of alkenyl groups in component (C) ranges from 0.5:1 to 20:1,
(C) a phenolic compound having at least one alkoxy group and at least one alkenyl group per molecule in an amount such that its proportion in the composition is from 0.01 wt% to 10 wt%,
(D) 5∼100 parts by weight of an inorganic filler, and
(E) platinum catalyst in an amount sufficient to cure the composition.

Hereinbelow, the silicone rubber composition is explained in detail. Component (A), which is the principal component of the composition, is a polydiorganosiloxane having at least two silicon-bonded alkenyl groups per molecule. Although the molecular structure of component (A) is essentially linear, to a certain extent, portions of its molecular chain may be branched. The silicon-bonded alkenyl groups contained in component (A) are exemplified by vinyl, allyl, butenyl, and hexenyl. There are no limitations concerning the locations of the alkenyl groups on the molecular chain and they may be located at the terminal ends of the molecular chain, pendant, or both. However, from the standpoint of the superior mechanical characteristics of the resultant silicone rubber, as a rule, the terminal ends of the molecular chain are the preferred location. Silicon-bonded groups of component (A) other than the alkenyl groups are exemplified by monovalent hydrocarbon groups, such as methyl, ethyl, propyl, butyl, octyl, and other alkyl groups; phenyl, tolyl, and other aryl groups; and by halogen-substituted alkyl groups such as 3-chloropropyl and 3,3,3-trifluoropropyl. There are no particular limitations concerning the viscosity of component (A), however preferably it is in the range of from 10 mPa·s to 1,000,000 mPa·s at 25°C.

Examples of the polydiorganosiloxane comprising component (A) include a polydimethylsiloxane having both terminal ends of the molecular chain blocked by dimethylvinylsiloxy groups, a dimethylsiloxane-methylvinylsiloxane co-polymer having both terminal ends of the molecular chain blocked by trimethylsiloxy groups, a dimethylsiloxane-methylvinylsiloxane co-polymer having both terminal ends of the molecular chain blocked by dimethylvinylsiloxy groups, a dimethylsiloxane-methylphenylsiloxane co-polymer having both terminal ends of the molecular chain blocked by dimethylvinylsiloxy groups, a dimethylsiloxane-methyl(3,3,3-trifluoropropyl)siloxane co-polymer having both terminal ends of the molecular chain blocked by dimethylvinylsiloxy groups, a polydimethylsiloxane having both terminal ends of the molecular chain blocked by dimethylhexenylsiloxy groups, a dimethylsiloxane-methylhexenylsiloxane co-polymer having both terminal ends of the molecular chain blocked by trimethylsiloxy groups, a dimethylsiloxane-methylhexenylsiloxane co-polymer having both terminal ends of the molecular chain blocked by dimethylhexenylsiloxy groups, a dimethylsiloxane-methylphenylsiloxane co-polymer having both terminal ends of the molecular chain blocked by dimethylhexenylsiloxy groups, and a dimethylsiloxane-methyl(3,3,3-trifluoropropyl)siloxane co-polymer having both terminal ends of the molecular chain blocked by dimethylhexenylsiloxy groups.

Component (B), a cross-linking agent, is a polyorganosiloxane having at least three silicon-bonded hydrogen atoms per molecule. There are no limitations concerning the molecular structure of component (B), which may be exemplified by linear, partially branched linear, branched, cyclic, or resin-like molecular structures. The silicon-bonded organic groups of component (B) other than the silicon-bonded hydrogen atoms are exemplified by monovalent hydrocarbon groups such as methyl, ethyl, propyl, and other alkyl groups; phenyl, tolyl, and other aryl groups; and halogen-substituted alkyl groups such as 3-chloropropyl and 3,3,3-trifluoropropyl. Although there are no limitations concerning the viscosity of component (B), it is preferable that its viscosity at 25°C should be in the range of from 3 mPa·s to 10,000 mPa·s.

Examples of component (B) include a polymethylhydrogensiloxane having both terminal ends of the molecular chain blocked by trimethylsiloxy groups, a dimethylsiloxane-methylhydrogensiloxane co-polymer having both terminal ends of the molecular chain blocked by trimethylsiloxy groups, a dimethylsiloxane-methylhydrogensiloxane co-polymer having both terminal ends of the molecular chain blocked by dimethylhydrogensiloxy groups, cyclic dimethylsiloxane-methylhydrogensiloxane co-polymers, and cyclic polymethylhydrogensiloxanes.

The amount of component (B) in the composition is such that the ratio of the number of moles of the silicon-bonded hydrogen atoms in component (B) to the sum of the number of moles of silicon-bonded alkenyl groups in component (A) and the number of moles of alkenyl groups in component (C), which will be described later, ranges from 0.5:1 to 20:1, and, preferably, from 1:1 to 3:1. The reason for this is that when the amount of component (B) is below the lower limit of the above-mentioned range, the resultant composition tends to fail to cure completely, whereas when it exceeds the upper limit of the above-mentioned range the mechanical strength of the resultant silicone rubber tends to decrease.

Component (C) is a characteristic feature of the present composition and is as explained above. The amount of component (C) is such that its proportion in the present composition ranges from 0.01 wt% to 10 wt%, preferably from 0.05 wt% to 5 wt%, and more preferably from 0.1 wt% to 3 wt%. This is due to the fact that when the amount of component (C) is below the lower limit of the above-mentioned range the present composition tends to fail to adhere to organic resin to a sufficient extent, whereas when it exceeds the upper limit of the above-mentioned range the mechanical strength of the silicone rubber tends to decrease.

The reinforcing filler of component (D) is used to improve the mechanical strength of the silicone rubber moldings obtained by curing the present composition. Examples of component (D) include dry process silica (i.e. fumed silica); wet process silica (i.e. precipitated silica); hydrophobic silicas produced by treating dry or wet process silica's surfaces with hexaorganosilazane, organochlorosilane, or organoalkoxysilane; various kinds of carbon black; and colloidal calcium carbonate. Among these reinforcing fillers, silica micro-powders with a specific surface area by the B.E.T. method of at least 50 m²/g are preferable. The amount of the component (D) is 5∼100 parts by weight and preferably 5∼40 parts by weight, per 100 parts by weight of component (A).

The platinum catalyst of component (E) is used to cure the present composition. Component (E) is exemplified by fine particle catalysts of thermoplastic resin containing, in terms of platinum metal atoms, at least 0.01 wt% of a platinum catalyst, such as microparticulate platinum, chloroplatinic acid, alcohol-modified products of chloroplatinic acid, chelate compounds of platinum, complexes of platinum and diketones, complexes of chloroplatinic acid and olefins, complexes of chloroplatinic acid and divinyltetramethyldisiloxane, and catalysts in which the above-mentioned compounds are held on supports such as alumina, silica, and carbon black. Among these platinum catalyst complexes of chloroplatinic acid and divinyltetramethyldisiloxane are preferred, as are fine particle catalysts of thermoplastic resin containing, in terms of platinum metal atoms, not less than 0.01 wt% platinum catalyst.

In the present composition the amount of added component (E) is sufficient to cure the composition. Typically this amount is that providing platinum metal atoms in the range of 0.1∼200 parts by weight and preferably in the range of 1∼100 parts by weight, per 1,000,000 parts by weight of component (A).

In addition, it is preferable to add cure inhibitors to the present composition in order to improve handling characteristics and storage stability. The cure inhibitors are exemplified by 2-methyl-3-butyn-2-ol, 2-phenyl-3-butyn-2-ol, 3-methyl-1-hexyn-3-ol, 1,5-hexadiyne, 1,6-heptadiyne, 1-ethyl-1-cyclohexanol, and other acetylene compounds; 1,3-divinyltetramethyldisiloxane, 1,3,5,7-tetravinyltetramethylcyclotetrasiloxane, 1,3-divinyl-1,3-diphenyldimethyldisiloxane and other alkenylsiloxane oligomers; tributylamine, tetramethylethylenediamine, benzotriazole, and other nitrogen-containing compounds; triphenylphosphine, and other phosphorus-containing compounds, and, in addition, sulfur-containing compounds, hydroperoxy compounds, and maleic acid derivatives. The amount of the added cure inhibitors is preferably in the range of 0.005∼10 parts by weight per 100 parts by weight of the total of component (A) and component (B).

So long as the object of the present invention is not impaired, various known additives commonly added to silicone rubber compositions may be compounded with the composition. Such additives are exemplified by iron oxide, cerium oxide, and other heat resistance-imparting agents; zinc carbonate, fumed titanium dioxide, and other flame resistance-imparting agents; quartz powder, diatomaceous earth, heavy calcium carbonate, light calcium carbonate, magnesium oxide, carbon black, and other extending fillers; red iron oxide, titanium dioxide, and other pigments.

The present composition can be easily produced by combining and homogeneously mixing the above-mentioned component (A) through component (E), and, if necessary, various known additives commonly added to silicone rubbers. A kneader-mixer, a Ross mixer, a Hobart mixer, or other publicly known equipment used in the production of silicone rubber compositions can be employed as the manufacturing equipment. In addition, in order to improve the room-temperature storage stability of the present composition while preserving its superior post-storage curability, it is preferable to store it by dividing it into a main ingredient composition comprising component (A), component (C), component (D), and component (E) and a cross-linking agent composition comprising component (A), component (B), and component (D) and then prepare the silicone rubber composition by mixing the two compositions in the process of insert molding or two-cavity molding.

Because the composition of the present invention as described above possesses superior adhesive properties with respect to polyethylene resins, polypropylene resins, PET, PBT, and other saturated polyester resins, polystyrene resins, AS resins, ABS resins, polyamide resins, polycarbonate resins, acrylic resins, methacrylic resins, and other organic resins and has superior mold release properties with respect to molding dies, it is suitable for silicone rubber compositions used for insert molding and for silicone rubber compositions used for two-cavity molding in combination with organic resins.

### Examples

The silicone rubber composition of the present invention will now be explained in detail by referring to application examples. In the application examples, the term "viscosity" refers to values measured at 25°C. In addition, in Application Example 1, Application Example 2, and Comparative Example 1, the evaluation of the adhesive properties and mold release properties of composite moldings made up of a silicone rubber molding and an organic resin molding was carried out in the following manner.

### <Evaluation of Adhesive Properties>

Rupture produced in the adhesive joint between a silicone rubber molding and an organic resin molding in a composite molding was measure by separating the silicone resin molding from the organic resin molding using a forked tool. The results of the evaluation are described in the following manner:
Symbol O: Rupture occurred in the silicone rubber layer (cohesive failure: 100%)
Symbol △: Peeling occurred partially along the interface between the silicone rubber layer and the organic resin (cohesive failure: 70%∼90%)
Symbol X: Peeling occurred along the interface of the silicone rubber layer and the organic resin (cohesive failure: 0%).

### <Evaluation of Mold Release Properties>

The ease of removal of composite moldings (moldings formed by integrally coupling a silicone rubber molding and an organic rubber molding) from a molding die cavity was evaluated. The results of the evaluation are described in the following manner:
Symbol O: Excellent mold release properties (the composite molding could be easily removed from the molding die cavity).
Symbol X: Inadequate mold release properties (the silicone rubber molding forming part of the composite molding had become firmly bonded to the wall surface of the molding die and the composite molding could not be removed from the cavity of the molding die with ease, or the silicone rubber molding was destroyed in the process).

Application Example 1. A silicone rubber base compound was prepared by placing 100 parts by weight of a polydimethylsiloxane with a viscosity of 20 Pa·s having both terminal ends of the molecular chain blocked by dimethylvinylsiloxy groups, 30 parts by weight of dry process silica with a specific surface area by the B.E.T. method of 200 m²/g, 5 parts by weight of hexamethyldisilazane, as a silica surface treating agent, and 2 parts by weight water in a kneader-mixer, uniformly blending the ingredients, and then mixing them under heating at 170°C for 2 hours. After cooling, 2 parts by weight of a phenolic compound represented by formula (1) shown hereinbelow, 2.6 parts by weight of a dimethylsiloxane-methylhydrogensiloxane co-polymer with a viscosity of 5 mPa·s having both terminal ends of the molecular chain blocked by trimethylsiloxy groups (in an amount such that the ratio of the number of moles of silicon-bonded hydrogen atoms contained in the co-polymer to the sum of the number of moles of silicon-bonded vinyl groups in the above-mentioned polydimethylsiloxane and the number of moles of allyl groups in the phenolic compound represented by formula (1) shown hereinbelow was 1.5:1), 0.06 parts by weight of 3-methyl-1-hexyn-3-ol, and 7 ppm (by weight), in terms of platinum metal, of a complex of chloroplatinic acid and 1,3-divinyltetramethyldisiloxane were mixed with 100 parts by weight of the resultant silicone rubber base compound, producing a silicone rubber composition.

Next, a Nylon resin (Nylon-6 resin from Toray Industries, Inc.) molding was placed in a cavity of a mold used for insert molding, and the above-described silicone rubber composition was injected against it and cured by heating at 120°C for 10 minutes. The adhesive properties of the silicone rubber with respect to the Nylon resin and its mold release properties with respect to the molding die were evaluated using the resultant composite molding (in which silicone rubber and organic resin were integrally coupled in one body). Similarly, composite moldings (in which cured products of silicone rubber and those of organic resin were integrally coupled in one body) were fabricated in the same manner as described above, with the exception of using a polypropylene resin molding, a polybutylene terephthalate resin molding, and a polycarbonate resin molding instead of the Nylon resin molding used above. The same evaluation as above was carried out with respect to these composite moldings. The evaluation results are listed in Table 1 shown hereinbelow.

Comparative Example 1. A silicone rubber composition was prepared in the same manner as in Application Example 1, with the exception that the phenolic compound of Application Example 1 represented by formula (1) shown hereinbelow was not added. The adhesive properties of the silicone rubber composition with respect to organic resin and its mold release properties were evaluated in the same manner as in Application Example 1, with the results listed in Table 1 shown hereinbelow.

### Formula (1):

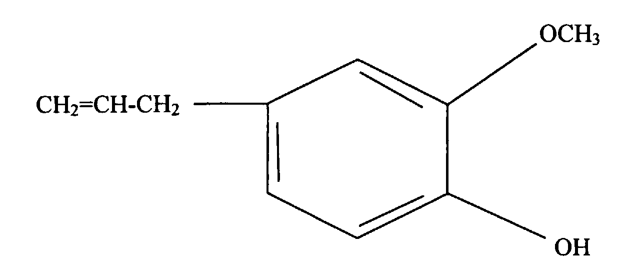

Application Example 2. A silicone rubber composition was prepared by mixing 100 parts by weight of the silicone rubber base compound prepared in Application Example 1, 4.7 parts by weight of a dimethylsiloxane-methylhydrogensiloxane co-polymer with a viscosity of 5 mPa·s (in an amount such that the ratio of the number of moles of silicon-bonded hydrogen atoms in the co-polymer to the sum of the number of moles of silicon-bonded vinyl groups in the above-mentioned polydimethylsiloxane and the number of moles of allyl groups in the phenolic compound represented by formula (2) shown hereinbelow was 1.5:1), 0.06 parts by weight of 3-methyl-1-hexyne-3-ol, and 7 ppm (by weight) in terms of platinum metal, of a fine particle catalyst of thermoplastic resin (containing 0.4 wt% platinum metal, with an average particle size of 1 *µ*m). The adhesive properties of the silicone rubber composition with respect to organic resin and its mold release properties were evaluated in the same manner as in Application Example 1, with the results listed in Table 1 shown hereinbelow.

### Formula (2):

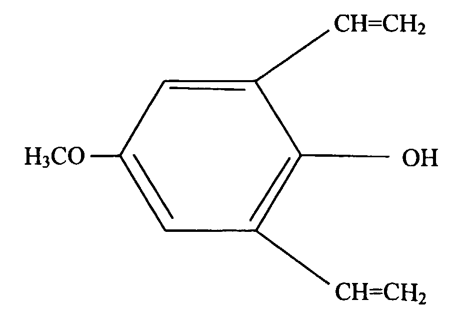

**Table 1**

| | Application Example 1 | Application Example 2 | Application Example 3 |
|---|---|---|---|
| Nylon-6 resin | O | O | X |
| Polypropylene resin | O | O | X |
| Polybutylene terephthalate resin | O | O | X |
| Polycarbonate resin | O | O | X |
| Mold release properties | O | O | O |

Application Example 3. A silicone rubber base compound was prepared by adding 30 parts by weight of a dry process silica with a B.E.T. specific surface area of 200 m²/g surface treated with hexamethyldisilazane to 100 parts by weight of a dimethylpolysiloxane (vinyl group content: 0.10 wt%) with a viscosity of 40 Pa·s having both terminal ends of the molecular chain blocked by dimethylvinylsiloxy groups and mixing them for 1 hour at 180°C. A mixture with a viscosity of 500 Pa·s (mixture A) was obtained by adding and mixing 2 parts by weight of a phenolic compound represented by formula (3) shown hereinbelow and 0.1 parts by weight of an isopropyl alcohol solution of chloroplatinic acid (platinum metal content: 3 wt%) with 100 parts by weight of the silicone rubber base compound. Subsequently, a mixture (mixture B) similar to the mixture described above was obtained by adding and mixing 6.2 parts by weight of a dimethylsiloxane-methylhydrogensiloxane co-polymer with a viscosity of 5 mPa·s having both terminal ends of the molecular chain blocked by trimethylsiloxy groups (in an amount such that the ratio of the number of moles of silicon-bonded hydrogen atoms in the co-polymer to the sum of the number of moles of silicon-bonded vinyl groups in the above-mentioned polydimethylsiloxane and the number of moles of allyl groups in the phenolic compound represented by formula (3) shown hereinbelow was 1.5:1) with 100 parts by weight of the same silicone rubber base compound as the one used above. Mixture A was placed in a storage tank, and mixture B was placed in another storage tank. After that, the mixtures were fed via a force-feed pump to a static mixer pre-cooled to -5°C using a refrigerant circulation apparatus, and in the mixer, mixture A and mixture B were mixed in a proportion of 1:1 (by weight ratio), producing a liquid silicone rubber composition.

Simultaneously, Nylon resin (Nylon-66 from Toray Industries, Inc.) was charged to a thermoplastic resin injection molding apparatus and melted at a temperature of 230°C∼250°C. Next, a continuous injection molding apparatus for two-cavity molding was prepared for use. The apparatus was made up of a first lower stationary mold member having a concave molding section, a second lower stationary mold member having a concave molding section identical to the first lower stationary mold member, a first upper movable mold member having a primary injection material passageway and a gate, and a second upper movable mold member having a concave molding section, a secondary injection passageway, and a gate, and was so constructed that the two upper movable mold members could be alternately mated with the two lower stationary mold members; also, the first upper movable mold member partially defined a cavity by closing the concave molding section of the lower stationary mold member and the second upper movable mold member mated with the lower stationary mold member, defining a main molding cavity. Using this apparatus, a single injection of the above-mentioned Nylon resin was carried out into the partially formed cavity produced by the mating of the first lower stationary mold member and the first upper movable mold member, which were maintained at a temperature of 70°C. Molding was carried out using an injection time of 10 seconds and a setting time of 40 seconds. Next, the first movable mold member was opened, the first lower stationary mold member holding the Nylon resin molding was mated with the second upper movable mold member, and the liquid silicone rubber composition obtained as described above was injected and cured in the newly formed main cavity. Injection was carried out using an injection time of 10 seconds, a heating time of 30 seconds, and a cavity temperature of 70°C. The resultant composite body was a molding, in which silicone rubber and Nylon resin were firmly integrally coupled in one body. The interface between them was flat, the molding had excellent dimensional precision and high production characteristics. Also, the respective end sections of the silicone rubber and Nylon resin moldings were secured in a tensile strength testing apparatus and tensile strength testing was carried out by measuring its break strength, which was 30 kg/cm². Also, when the rupture area condition was examined with the naked eye, it was found that rupture had occurred entirely in the silicone rubber portion (100% cohesive failure).

### Formula (3):

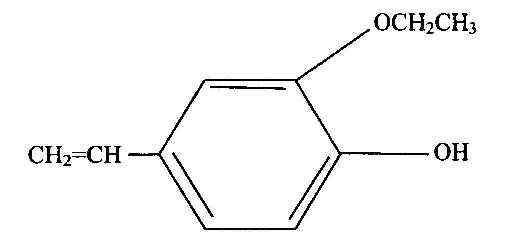

## Claims

1. A silicone rubber composition comprising from 0.01 wt% to 10 wt% of a phenolic compound having at least one alkoxy group and at least one alkenyl group per molecule.

2. The silicone rubber composition according to claim 1, where the silicone rubber composition is of the addition reaction curable type.

3. A silicone rubber composition comprising
(A) 100 parts by weight of a polydiorganosiloxane having at least two silicon-bonded alkenyl groups per molecule
(B) polyorganosiloxane having at least three silicon-bonded hydrogen atoms per molecule in an amount such that the ratio of the mole number of silicon-bonded hydrogen atoms in component (B) to the sum of the number of moles of silicon-bonded alkenyl groups in component (A) and the number of moles of alkenyl groups in component (C) ranges from 0.5:1 to 20:1,
(C) a phenolic compound having at least one alkoxy group and at least one alkenyl group per molecule in an amount such that its proportion in the composition is from 0.01 wt% to 10 wt%,
(D) 5∼100 parts by weight of an inorganic filler,
and
(E) platinum catalyst in an amount sufficient to cure the present composition.

4. The silicone rubber composition according to claim 3, where component (E) is a fine particle catalyst of thermoplastic resin containing in terms of platinum metal atoms at least 0.01 wt% of a platinum catalyst, the softening point of the thermoplastic resin being 50°C∼200°C, and the average particle size of the fine particle catalyst of thermoplastic resin ranging from 0.01 *µ*m to 10 *µ*m.

5. The silicone rubber composition according to any of claims 1 to 4, where the alkoxy group of the phenolic compound is methoxy and the alkenyl group of the phenolic compound is vinyl.

6. The silicone rubber composition according to any of claims 1 to 5, comprising from 0.05 wt% to 5 wt% of the phenolic compound.

7. The silicone rubber composition according to claim 6 comprising from 0.1 wt% to 3 wt% of the phenolic compound.

8. A composite molding comprising the silicone rubber composition according to any of claims 1 to 7 and an organic resin.
